# FASCICULE DE BREVET EUROPEEN

(11) **EP 0 955 197 B1**
(45) Date de publication et mention de la délivrance du brevet: **02.05.2003**
(21) Numéro de dépôt: 99400254.1
(22) Date de dépôt: 04.02.1999
(51) Int. Cl.: B60J 10/00, B60J 10/04

(54) **Perfectionnements apportés aux profilés en élastomère pour encadrements de vitre coulissante de portes d'un véhicule automobile**
Verbesserungen an elastomerischen Formteilen zum Einfassen einer beweglichen Kraftfahrzeugscheibe
Enhanced elastomeric profiles for a movable vehicle window

(30) Priorité: 07.05.1998 FR 9805814
(43) Date de publication de la demande: 10.11.1999
(73) Titulaire: Metzeler Automotive Profile Systems Transieres S.A., 92000 Nanterre (FR)
(72) Inventeur: Paul, Jean-Claude, 27910 Perriers sur Andelle (FR)
(74) Mandataire: Jolly, Jean-Pierre

(56) Documents cités:
- EP-A- 0 372 745
- EP-A- 0 403 854
- GB-A- 2 272 932
- GB-A- 2 309 197
- US-A- 4 042 741

## Description

La présente invention concerne les profilés en élastomère pour encadrements de vitre coulissante de portes d'un véhicule automobile. Elle concerne plus particulièrement les profilés du type coulisse, qui assurent le guidage latéral de la glace coulissante dans ses mouvements et son étanchéité en position de fermeture, et les profilés du type lécheur de bas de glace, ainsi dénommés parcequ'ils comportent une lèvre, disposée transversalement au mouvement de la vitre coulissante, dont elle lèche une face, en particulier la face externe, pour assurer l'étanchéité suivant le bord inférieur de l'encadrement de vitre.

Ces organes ont essentiellement une fonction d'étanchéité, mais les constructeurs d'automobiles exigent de plus en plus qu'ils contribuent également à l'aspect ornemental du véhicule. Ces profilés, réalisés habituellement par extrusion, sont constitués usuellement d'un caoutchouc tel que l'E.P.D.M. (éthylène-propylène diène monomère), qui présente souvent le défaut de mal vieillir en surface. Au lieu de conserver leur couleur initiale ou de rester noirs, de tels élastomères changent en effet superficiellement de couleur, au cours du temps, et ceci de façon aléatoire, avec pour conséquence un aspect peu agréable des parties exposées au regard.

Ces élastomères présentent toutefois des qualités de déformabilité et de souplesse, aussi bien aux températures usuelles qu'à des températures élevées ou très basses, qui les rendent difficilement remplaçables pour ces applications.

EP-A-0 372 745 a déjà proposé de gainer certaines parties de profilés en élastomère, par exemple une lèvre, comme représenté à la figure 6 de ce document antérieur, d'une matière thermoplastique, mais le procédé utilisé dans ce but est long et compliqué, puisqu'il comprend deux phases successives d'extrusion, séparées par une phase de durcissement ou vulcanisation partielle à chaud de l'élastomère. En outre, aucune fonction particulière n'est attribuée à la matière plastique dont il est seulement dit qu'elle peut être de n'importe quelle couleur.

On connaît par ailleurs par GB-A-2 272 932, un profilé en caoutchouc dont une lèvre est recouverte d'une mince couche d'un matériau souple résistant à la fissuration par l'ozone.

En revanche, on ne connaît pas, dans la technique antérieure, de profilé en élastomère présentant une résistance améliorée au vieillissement dû à une exposition au rayonnement ultra-violet.

La présente invention vise à résoudre ce problème en continuant à réaliser ces profilés en un élastomère extrudé, mais en gainant la ou les parties visibles de l'extérieur d'une matière thermoplastique telle que le polypropylène, coextrudée avec l'élastomère, mais présentant une meilleure résistance au vieillissement ou rayonnement ultra-violet que celui-ci.

L'invention a par conséquent pour premier objet un profilé extrudé et vulcanisé en élastomère pour encadrement de vitre coulissante d'une porte d'un véhicule automobile, la ou les parties visibles de l'extérieur de ce profilé étant gainées d'une mince couche d'une matière thermoplastique, ce profilé étant caractérisé en ce que ladite matière thermoplastique est coextrudée avec lui et présente une meilleure résistance au vieillissement par exposition au rayonnement ultra-violet que l'élastomère dont il est constitué.

La couche de matière thermoplastique sera aussi mince que possible, de préférence inférieure à six dixièmes de millimètre.

De façon usuelle, l'élastomère pourra être un E.P.D.M. d'une dureté au moins égale à 70 Shore A.

La matière thermoplastique sera avantageusement constituée de polypropylène, de mélanges polypropylène - polyéthylène ou polypropylène - E.P.D.M., ou encore de polyuréthane, dans lesquels sont incorporés des agents de protection contre le rayonnement ultra-violet.

Cette matière thermoplastique aura de préférence une dureté supérieure à 40 Shore D, de manière à présenter une bonne résistance aux rayures.

De manière à améliorer encore l'aspect de la couche de matière thermoplastique, celle-ci comportera de préférence une surface externe grainée, qui présentera ainsi un aspect très plaisant au regard.

Dans le cas d'une coulisse comportant une première partie à section en U, destinée à coiffer un bord saillant de l'encadrement de vitre, et une seconde partie à section en U, attenante à la précédente et destinée à guider la vitre mobile dans ses mouvements, c'est la surface externe de la branche du U de la seconde partie non attenante à la première partie qui sera avantageusement gainée de la matière thermoplastique.

Dans le cas d'un lécheur de bas de glace comportant une partie à section en U, apte à coiffer une traverse du châssis de la porte et à laquelle est attenante une lèvre destinée à lécher la face externe de la vitre, au moins une partie servant d'élément décoratif et indépendante de cette lèvre ou disposée dans le prolongement de la base de celle-ci sera gainée de la matière thermoplastique.

L'invention a également pour objet un procédé de fabrication du profilé pour encadrement de vitre qui vient d'être défini, caractérisé en ce que l'élastomère et la matière thermoplastique ayant une meilleure résistance au vieillissement que cet élastomère sont coextrudés préalablement à la vulcanisation de l'élastomère.

Sans sortir du cadre de l'invention, la matière thermoplastique peut toutefois être aussi extrudée de façon connue en soi postérieurement à l'extrusion de l'élastomère et à sa vulcanisation.

D'autres caractéristiques et avantages de l'invention apparaîtront dans la description détaillée qui va suivre de diverses formes de réalisation. Dans cette description, on se référera aux dessins schématiques annexés, sur lesquels :
La figure 1 est une coupe transversale d'une coulisse pour encadrement de vitre mobile conforme à l'invention ;
La figure 2 est une coupe transversale d'un premier lécheur de bas de glace conforme à l'invention, pour encadrement d'une glace coulissante de porte d'automobile ;
La figure 3 est une coupe transversale d'un second lécheur de bas de glace conforme à l'invention.

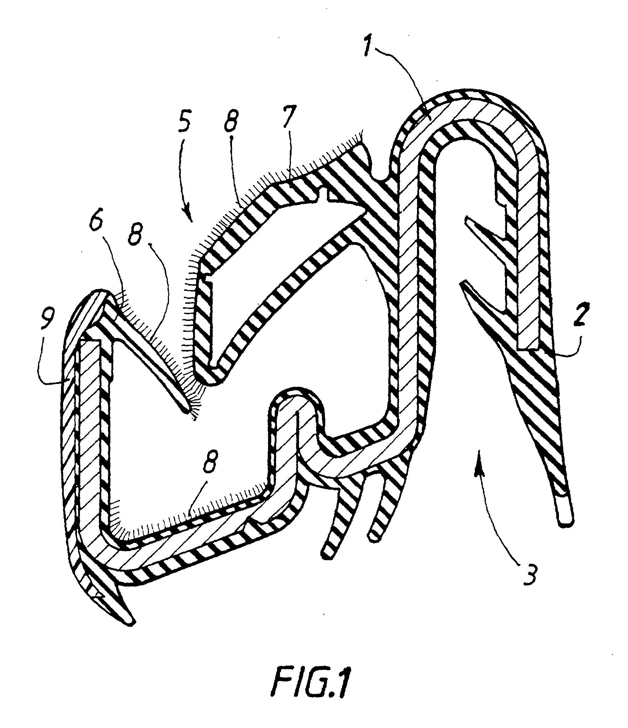

La coulisse pour encadrement de vitre mobile représentée sur la figure 1 est d'un type usuel et comprend une armature métallique, en aluminium par exemple, gainée par extrusion d'un E.P.D.M. 2, d'une dureté égale par exemple à 75 Shore A, et profilée de manière telle que la coulisse comporte deux parties à sections en U inversées l'une par rapport à l'autre, à savoir :
- une partie 3, destinée à coiffer un bord saillant de l'encadrement de vitre et dont une branche du U comporte ici des lèvres 4, dirigées vers l'intérieur du U et aptes à prévenir une désolidarisation de cette partie 3 et du bord saillant ;
- une partie 5, de profil en U inversé par rapport à la partie 3, avec laquelle elle a en commun une branche du U, cette partie 5 constituant la coulisse proprement dite, qui est destinée à recevoir la vitre coulissante et qui comporte ici, attenantes aux deux branches du U, deux lèvres 6 et 7, dirigées vers l'intérieur du U.

Des fibres floquées 8 recouvrent les portions de surface des lèvres 6 et 7 et de la base du U de la partie 5 destinées à entrer au contact de la vitre.

Conformément à l'invention, la branche du U de la partie 5 destinée à être disposée à l'extérieur de la vitre coulissante est gainée sur sa surface tournée vers l'extérieur d'une mince couche 9 de polypropylène, comportant une charge d'un agent contre le rayonnement ultra-violet. Ce polypropylène présente une bien meilleure résistance au vieillissement que l'E.P.D.M. et offre ainsi au regard une surface d'aspect beaucoup plus attrayant que l'élastomère, au bout d'une certaine période. Sa surface pourra d'ailleurs avoir avantageusement un aspect grainé, afin d'accroître son caractère ornemental.

On notera que la couche 9 de polypropylène est légèrement plus épaisse en haut de la branche externe de la coulisse, de manière à accroître la surface de contact avec l'E.P.D.M. au niveau de la lèvre 8 et à offrir ainsi une meilleure résistance mécanique à cet emplacement.

De préférence, le polypropylène aura une dureté supérieure à 40 Shore D, de manière à résister aux rayures accidentelles.

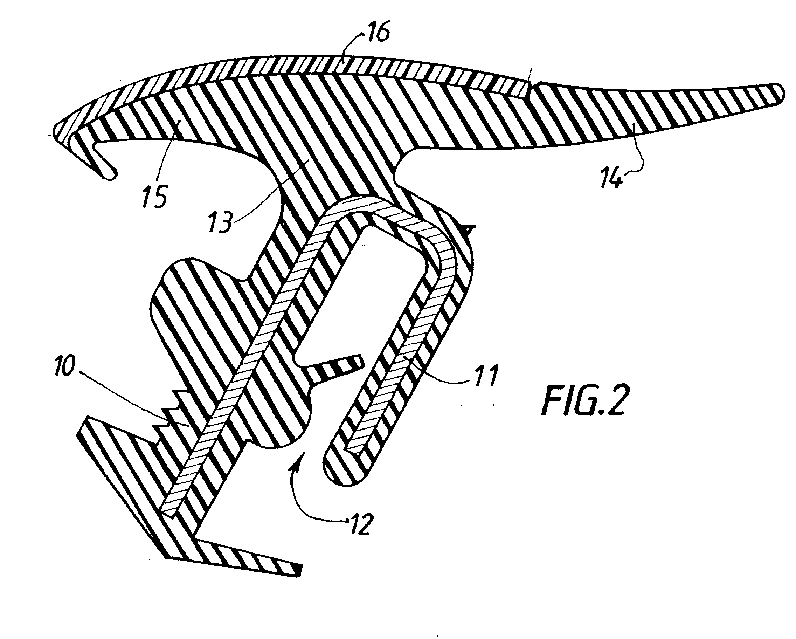

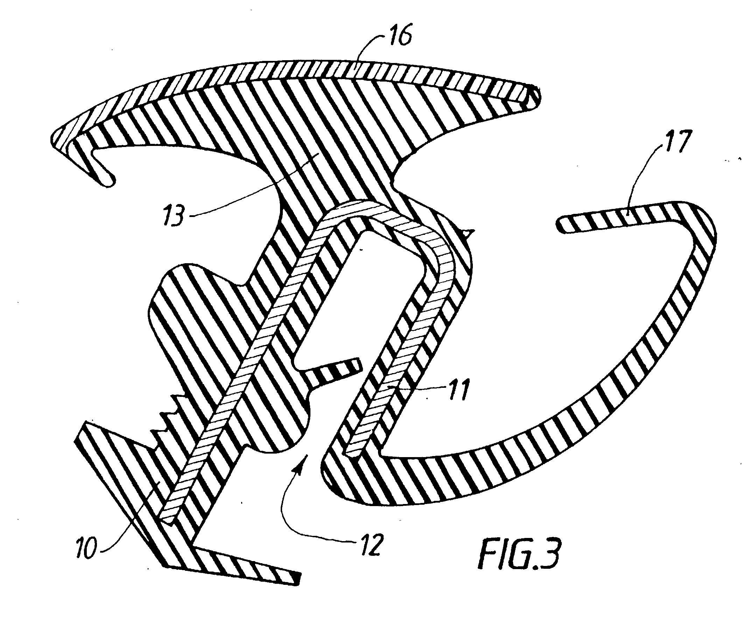

Le lécheur de bas de glace représenté sur la figure 2 est lui aussi en E.P.D.M. 10 et il comporte également une armature métallique 11 à section en U, définissant une partie évidée 12, destinée à coiffer une traverse disposée au bas d'un encadrement d'une vitre coulissante d'une porte d'automobile.

Une partie 13 faisant saillie latéralement par rapport à la base du U de la partie 2 comporte une lèvre souple 14, destinée à lécher la face externe de la vitre coulissante et à assurer l'étanchéité en bas de glace, cette lèvre 13 se prolongeant à sa base par un talon 15, destiné à enjoliver la porte du véhicule.

Pour remédier aux mauvaises caractéristiques de vieillissement de l'E.P.D.M., la face du talon 15 tournée vers l'extérieur du véhicule est revêtue d'une mince couche 16 de polypropylène, traité pour résister au rayonnement ultra-violet, qui, comme précédemment, aura de préférence une dureté supérieure à 40 Shore D et comportera un grainage de surface pour l'enjoliver.

Dans la variante du lécheur de bas de glace de la figure 3, les organes déjà décrits en référence à la figure 2 sont désignés par les mêmes chiffres de référence que précédemment. Ce lécheur comporte toutefois une lèvre souple 17, qui est attenante à la branche du U de la partie destinée à venir en position contiguë à la vitre coulissante et qui vient lécher la surface interne de cette vitre.

Comme dans la réalisation précédente, la partie en saillie 13 forme enjoliveur et est revêtue sur sa surface tournée vers l'extérieur d'une mince couche 16 de polypropylène résistant aux rayons ultra-violets, dont la résistance au vieillissement est bien supérieure à celle de l'E.P.D.M.

Comme indiqué ci-dessus, dans toutes ces réalisations, la couche de polypropylène sera obtenue par coextrusion avec l'E.P.D.M., préalablement à la phase de vulcanisation de cet élastomère, ou par extrusion sur l'élastomère préalablement extrudé et vulcanisé.

L'invention apporte par conséquent un moyen simple et facile à mettre en oeuvre pour remédier aux défauts de vieillissement de l'E.P.D.M. et d'autres élastomères utilisés pour la réalisation de profilés pour encadrements de vitre coulissante de portes de véhicules automobiles.

## Revendications

1. Profilé extrudé et vulcanisé en élastomère pour encadrement de vitre coulissante d'une porte d'un véhicule automobile, la ou les parties visibles de l'extérieur sont gainées d'une mince couche (9, 16) d'une matière thermoplastique, ce profilé étant **caractérisé en ce que** ladite matière thermoplastique est coextrudée avec le profilé et présente une meilleure résistance au vieillissement par exposition au rayonnement ultra-violet que l'élastomère.

2. Profilé selon la revendication 1, **caractérisé en ce que** la matière thermoplastique a une épaisseur inférieure à six dixièmes de millimètre.

3. Profilé selon l'une des revendications 1 et 2, **caractérisé en ce que** la matière thermoplastique a une dureté supérieure à 40 Shore D, tandis que l'élastomère a une dureté au moins égale à 70 Shore A.

4. Profilé selon l'une des revendications 1 à 3, **caractérisé en ce que** l'élastomère est un E.P.D.M.

5. Profilé selon l'une des revendications 1 à 4, **caractérisé en ce que** la matière thermoplastique est un polypropylène, un mélange polypropylène - polyéthylène ou polypropylène - E.P.D.M., ou encore un polyuréthane, dans lequel sont incorporés des agents de protection contre le rayonnement ultra-violet.

6. Profilé selon l'une des revendications 1 à 5, **caractérisé en ce que** la surface externe de la couche de matière thermoplastique est grainée.

7. Procédé de fabrication d'un profilé selon l'une des revendications 1 à 6, **caractérisé en ce que** l'élastomère et la matière thermoplastique ayant une meilleure résistance au vieillissement que cet élastomère sont coextrudés préalablement à la vulcanisation de l'élastomère.

## Patentansprüche

1. Extrudiertes und vulkanisiertes Profilteil aus einem Elastomer zum Einrahmen einer Schiebefensterscheibe einer Kraftfahrzeugtür, wobei der oder die von außen sichtbaren Teile mit einer dünnen Schicht (9, 16) aus einem thermoplastischen Material umhüllt sind, **dadurch gekennzeichnet, daß** das thermoplastische Material mit dem Profilteil koextrudiert ist und eine höhere Alterungsbeständigkeit gegenüber der Einwirkung von UV-Strahlung als das Elastomer besitzt.

2. Profilteil nach Anspruch 1, **dadurch gekennzeichnet, daß** das thermoplastische Material eine Dicke von weniger als sechs zehntel Millimeter besitzt.

3. Profilteil nach einem der Ansprüche 1 und 2, **dadurch gekennzeichnet, daß** das thermoplastische Material eine Härte von mehr als 40 Shore D besitzt, wohingegen das Elastomer eine Härte von kleiner gleich 70 Shore A besitzt.

4. Profilteil nach einem der Ansprüche 1 bis 3, **dadurch gekennzeichnet, daß** das Elastomer EPDM ist.

5. Profilteil nach einem der Ansprüche 1 bis 4, **dadurch gekennzeichnet, daß** das thermoplastische Material Polypropylen, eine Mischung Polypropylen - Polyethylen oder Polypropylen - EPDM oder Polyurethan ist, in die beziehungsweise in das Schutzmittel gegen UV-Strahlen beigemengt sind.

6. Profilteil nach einem der Ansprüche 1 bis 5, **dadurch gekennzeichnet, daß** die Außenfläche der Schicht aus thermoplastischem Material gekörnt ist.

7. Verfahren zur Herstellung eines Profilteils nach einem der Ansprüche 1 bis 6, **dadurch gekennzeichnet, daß** das Elastomer und das thermoplastische Material, das eine höhere Alterungsbeständigkeit als das Elastomer besitzt, vor der Vulkanisierung des Elastomers koextrudiert werden.

## Claims

1. Extruded and vulcanized profile made of elastomer for framing a sliding window of a motor vehicle door, the part or parts visible from the outside being sheathed or a thin layer (9, 16) of a thermoplastic, this profile being **characterized in that** the said thermoplastic is coextruded with the profile and has better UV ageing resistance than does elastomer.

2. Profile according to Claim 1, **characterized in that** the thermoplastic has a thickness of less than six tenths of a millimetre.

3. Profile according to either of Claims 1 and 2, **characterized in that** the thermoplastic has a hardness higher than 40 Shore D, whereas the elastomer has a hardness at least equal to 70 Shore A.

4. Profile according to one of Claims 1 to 3, **characterized in that** the elastomer is an E.P.D.M.

5. Profile according to one of Claims 1 to 4, **characterized in that** the thermoplastic is a polypropylene, a polypropylene-polyethylene or polypropylene-E.P.D.M blend, or, alternatively, a polyurethane, into which UV stabilizers are incorporated.

6. Profile according to one of Claims 1 to 5, **characterized in that** the outer surface of the layer of thermoplastic is grained.

7. Method of manufacturing a profile according to one of Claims 1 to 6, **characterized in that** the elastomer and the thermoplastic which has better ageing resistance than this elastomer are coextruded before the elastomer is vulcanized.
